# EUROPEAN PATENT APPLICATION

(11) **EP 1 990 499 A2**
(43) Date of publication of application: **12.11.2008**
(21) Application number: 07019743.9
(22) Date of filing: 09.10.2007
(51) Int. Cl.: E06B 9/24

(54) **A light control device for instance for a venetian blind**

(30) Priority: 07.05.2007 DK 200700685
(71) Applicant: Jørn Krab Holding APS, 1610 Copenhagen V. (DK)
(72) Inventor: Nielsen, Jesper, 2100 København Ø (DK); Krab, Jørn, 1810 Frederiksberg C. (DK)
(74) Representative: Nielsen, Henrik Sten

(57) **Abstract**

The invention relates to devices, systems and methods for controlling the amount of light transmitted through an opening in a wall etc. from a source region to a receptor region and to the blockage of annoying light from specific directions relative to the opening. According to the invention there is provided d device for blockage of light transmission from a spatially confined light source, such as the sun, to a receptor region (7) in space, where said light source is located in a source region (6) on one side of the device and said receptor region (7) is located in the other side of the device, where the device comprises at least one three-dimensional body, such as a baffle or panel (1) and where the device is provided with a front surface (3) and a rear surface (4), the three-dimensional body (1) being of a predetermined thickness (t1) and where the three-dimensional body (1) is provided with a plurality of light directing means defining light transmission paths or channels from said front surface (3) to said rear surface (4) of the device, such that light transmission from said source region (6) to said receptor region (7) is substantially blocked when said light source transmits light towards the front surface (3) of the device from at least one given direction relative to the front surface (3) of the device. Two classes of embodiments of the above device are described termed LENTICULAR LENS EMBODIMENTS and LIGHT PASSAGES EMBODIMENTS, respectively.

## Description

### TECHNICAL FIELD

The present invention relates generally to devices, systems and methods for controlling the amount of light transmitted through an opening such as a window in a wall of a building and more specifically to such devices that can be used for blocking an annoying direct light transmission from a light source located in a specific direction relative to the opening, for instance the sun, and still maintaining light transmission through the opening from other directions, although possibly with a reduced light intensity.

### BACKGROUND OF THE INVENTION

Variable shielding against sunlight, for instance accomplished by means of sun blinds or Venetian blinds is normally characterised by being adjusted to shield off a window opening etc., such that light coming from the sky outside the window opening from the direction towards zenith to the direction in which the sun is presently located is substantially prevented from entering a room behind the window opening. The closer the sun is to the horizon, the larger is the area of the sky that is actually shielded off, such that light coming from this area can not penetrate the window opening. An undesirable consequence of this is among others that those periods of the year, where the sun is relatively low in the sky (for instance the winter season) and where light transmission from the sky in general is most needed for lightning the room behind the window opening are also, quite undesirably, the periods of the year, during which most light from the outside is thus prevented from entering the room, when traditional shielding means, such as sun blinds or traditional Venetian blinds are used.

In a traditional Venetian blind, light from a light source positioned in a given direction relative to the Venetian blind can be effectively blocked by tilting the slats of the Venetian blind appropriately. However, in doing so, not only light transmitted from said light source, for instance the sun, is blocked, but also light transmission from other directions relative to the Venetian blind. Thus, the total amount of light entering a room behind the Venetian blind may be reduced more than desired, in order to effectively block light transmission from an annoying light source. The undesired resulting reduction of light transmitted from the outside to a room behind the Venetian blind can be compensated for by turning on artificial light within the room, which may not be the optimal solution, partly due to the associated energy consumption and possibly also due to the resultant light in the room being of another and possibly inferior character than the light obtained by transmission of outside light from the atmosphere.

There is hence a need for a device, a system and a method which effectively can block light transmission from a given direction, in order to eliminate or at least reduce annoying light transmission from a spatially confined light source, without eliminating light transmission from other directions in space.

### SUMMARY OF THE INVENTION

On the above background it is an object of the invention to provide a device or a system comprising several such devices that can effectively block light transmission from a light source located at one side of the device or system of devices through the device or system to a receptor region located at the opposite side of the device or system. Specifically the device or system according to the invention could be provided in a window opening in the façade of a building and be used for blocking annoying direct sunlight, without blocking light transmission from other directions. Using the device, system or method according to the invention would thus entail effective removal of the annoying direct sun light radiation, but still permit transmission of at least a major portion of the atmospheric light that contributes to lightning the room behind the window opening without annoyance.

The above and other objects and advantages is according to the invention attained with a device for blockage of light transmission from a spatially confined light source, such as the sun, to a receptor region in space, where said light source is located on one side of the device and said receptor region is located on the other side of the device, where the device comprises at least one three-dimensional body, such as a baffle or panel, although other more complicated three-dimensional bodies would also be conceivable at least in certain embodiments of the device according to the invention and where the device comprises a front surface and a rear surface, the baffle being of a predetermined thickness and where the baffle is provided with a plurality of light directing means defining transmission paths or channels from said front surface to said rear surface of the device, such that light transmission from said source region to said receptor region is substantially blocked when said light source transmits light towards the front surface of the device from at least one given direction relative to the front surface of the device.

In the various embodiments of devices and systems according to the present invention the said baffle or panel is shown and described as substantially planar with front and rear surfaces extending substantially parallel to each other, but non-planar baffles or plates or other suitable three-dimensional bodies would also fall within the scope of the present invention. Thus for instance the baffle might have the shape of a slat as used in a Venetian blind.

According to a first class of embodiments of the invention - in the following referred to as "LENTICULAR LENS EMBODIMENTS" - the device according to the invention comprises a baffle, which on the surface hereof facing the light source is provided with lens shaped portions dimensioned and oriented in such a manner relative to the front and/or rear surface of the baffle that substantially parallel rays of light from a light source in the light source region directed towards the front surface of the baffle with a given angle of incidence (α) relative to the front surface will converge on a light blockage regions or members or ribbons provided at a given distance (d) from the front surface of the baffle, whereby transmission of light through said device is substantially blocked, when said light source transmits light towards the front surface of the baffle from at least one given direction relative to the front surface of the baffle.

Specifically the light blockage regions or members could be provided on or adjacent the rear surface of the baffle, although it could also be embedded in the interior of the baffle. The baffle according to this first class of embodiments of the present invention is made of a transparent material such as a suitable plastics material, Plexiglas etc.

A specific embodiment of the first class comprises a square or rectangular substantially planar baffle of a light transparent material with a front and a rear surface, where the front surface is provided with a pattern of lens-shaped members, the surface of which is formed as a portion of the circumferential surface of a cylinder, with each cylinder extending in one direction of the baffle thereby forming lens members that concentrate the parallel light rays from the sun on the light blockage regions provided at a distance d behind the front surface. These light blockage regions is preferably formed by elongated members or ribbons extending in parallel with the longitudinal axis of the cylindrical lens members.

The light blockage regions, members or ribbons may be reflective at least on a surface hereof facing said front surface of the baffle. In this case light energy reaching the surface of the light blockage regions or ribbons will to a large extend be reflected back towards the source region preventing heating of the light blockage regions or ribbons. The light blockage regions, members or ribbons may however alternatively by made light absorbing, whereby light energy reaching the light blockage regions or ribbons will be converted to thermal energy, that can either be used for heating the reception region or that can be converted to electrical energy by suitable means in thermal communication with the light blockage regions, members or ribbons. In the latter case the electrical energy can be used for various purposes, for instance for driving/controlling the device according to the invention or systems of such devices, as will be described in more detail in the detailed description of the invention.

Various other embodiments of the first class of devices according to the invention will be described in the detailed description of the invention.

According to a second class of embodiments of the invention - in the following referred to as "LIGHT PASSAGES EMBODIMENT" - the device according to the invention comprises a baffle having a front surface and a rear surface, the baffle being of a predetermined thickness, where the baffle is provided with a plurality of through passages, defining transmission paths for light through the baffle, where the dimensions of said passages are chosen such that light transmission from said source to said receptor region is substantially blocked, when said light source transmit light towards the front surface of the baffle from at least one given direction relative to the front surface of the baffle.

According to one embodiment of a device of the second class of embodiments according to the invention, the baffle is a rectangular baffle and said through passages are substantially rectangular slits through the thickness of the baffle, the slits being oriented substantially similar to the rectangular baffle.

According to another embodiment of a device according to the invention, the front surface of the baffle comprises a first pattern of openings for the passage of light and the rear surface of the baffle comprises a corresponding second pattern of openings for the passage of light, where said first and second patterns of openings are displaced relative to each other along the front and rear surfaces of the baffle, respectively, such that light transmission paths are formed through the baffle between said first and second pattern of openings.

According to a specific version of the above embodiment, the inner region of the baffle between said front and rear surfaces is substantially hollow, whereby light transmission paths are created between a given first opening in the front surface and more than one second opening in the rear surface of the baffle.

The invention furthermore relates to a system for blockage of light transmission from a spatially confined light source, such as the sun, to a receptor region in space, where said light source is located on one side of the system and said receptor region is located on the other side of the system. An example of a system according to the invention could be a Venetian blind, where the individual slats of the Venetian blind are formed as the devices according to the invention as described above. The slats can be tilted in order to block transmission of direct sunlight through a window opening, but the system according to the invention does not prevent light transmission from other directions, thus letting atmospheric light that is not annoying through to the reception room behind the window opening.

The baffle - or in the case of a Venetian blind the slats - can be chosen substantially planar, but the invention is not limited to substantially planar baffles or slats, and baffles or slats of a curved surface shape, as is traditionally used in Venetian blinds, also fall within the scope of the present invention.

The invention furthermore relates to a method for blockage of light transmission from a spatially confined light source, such as the sun, to a receptor region in space, where said light source is located on one side of the device or on one side of a system according to the invention and said receptor region is located on the other side of the device or system; the method also comprises the step of orienting the first surface of the device in a direction that will substantially block the transmission of light from said light source to said reception region.

According to a first embodiment of the method, the orientation of the device/devices is performed manually, for instance by manual tilt means, if the devices are used to form a Venetian blind as described above. According to a specific embodiment of the method according to the invention, automatic orientation of the device/devices can, however, be accomplished by the detection of light energy impinging on a given surface area of the first surface of the device and controlling the orientation of the device based on the detected energy. By these means the device or system according to the invention may even follow a gradual movement of the light source in space, such as the movement of the sun throughout the day. According to the invention the energy supply required for automatically controlling the device or system according to the invention can be derived from the incident light by conversion of light energy to thermal energy and conversion hereof to electrical energy used to drive control means and/or motors/actuators that manipulate the device or system for instance according to the movement of the sun over the sky.

According to the principle of the invention, the device or system will be able to selectively shield off that path in the sky through which the sun will move and thereby let the light from the sky both above and below the sun penetrate through the device or system to a reception room behind the device or system. In order to fully attain the above effect, the device or system according to the invention must be controlled precisely either manually or automatically.

### BRIEF DESCRIPTION OF THE DRAWINGS

The present invention will be better understood with reference to the following detailed but not limiting description of embodiments of the device and system according to the invention in conjunction with the drawing, where:
Figure 1 shows a schematic cross sectional view of a first embodiment of a device according to the invention comprising a baffle provided with lens-shaped portions extending longitudinally along an outer (front) surface of the baffle and light blockage members extending longitudinally along the opposite (rear) surface of the baffle;
Figure 2 shows a schematic cross sectional view of a second embodiment of a device according to the invention corresponding the first embodiment except for the longitudinally extending light blockage members being embedded in the material of the baffle;
Figure 3a, 3b and 3c show schematic cross sectional views of a third embodiment of a device according to the invention, where the light blockage members are provided on a second baffle that can be displaced relative to a first baffle comprising the lens-shaped portions, whereby light transmission through the device (the two baffles) can be turned on or off and whereby also the angle between the surface of the baffle and the direction to the light source to be blocked can be varied;
Figure 4a shows a schematic perspective representation of a fourth embodiment of a device according to the invention comprising light blockage members within the baffle, where the light blockage members are provided in channels in the interior of the baffle and where the light blockage members are mounted for rotation about a longitudinal axis through the members;
Figure 4b shows a schematic cross sectional view of a fifth embodiment of a device according to the invention comprising light blockage members outside the baffle, extending substantially in parallel with the rear surface of the baffle, where the light blockage members are provided on a suitable support structure and mounted for rotation about a longitudinal axis through the members;
Figure 5a shows a schematic cross sectional view of a sixth embodiment of a device according to the invention, where the light blockage members are provided with a surface portion that is inclined relative to the front and/or rear surface of the baffle, whereby a portion of the light rays impinging on the light blockage members will be re-directed to other regions around the baffle;
Figure 5b shows a schematic cross sectional view of a seventh embodiment of a device according to the invention, where the light blockage members, having an inclined surface as in figure 5a are mounted for rotation in channels within the interior of the baffle;
Figure 6 shows an eight embodiment of a device according to the invention, where the lens shaped portions are covered by an outer, front layer of a transparent material;
Figure 7 show a ninth embodiment of a device according to the invention, where the part-cylindrical lens portions of the preceding embodiments are replaced by circular lens portions and where the longitudinally extending light blockage members or regions of the preceding embodiments are replaced by individual bight blockage members in the focal points of each of the individual lens portions;
Figure 8 shows a schematic cross sectional side view of a tenth embodiment of a device according to the invention;
Figure 9 shows a schematic perspective view of a portion of the tenth embodiment shown in figure 8;
Figure 10 shows a schematic cross sectional side view of the tenth embodiment shown in figure 8 with a typical orientation of the device relative to the direction to the sun, such that direct sunlight is blocked, whereas light coming from a region above the sun can pass through the device;
Figure 11 shows a schematic view of a system according to the invention comprising a plurality of devices as shown in figures 8, 9 and 10, the system corresponding to a Venetian blind, where the slats are the devices according to the invention;
Figure 12 shows a schematic view of a system according to the invention comprising devices in principle corresponding to the embodiment shown in figure 8, but with other relative dimensions of the open and closed portions of the baffle;
Figure 13 shows a schematic view of en eleventh embodiment of the device according to the invention seen from above (or below) and from the front and the side, respectively;
Figure 14 shows a schematic perspective view of the eleventh embodiment of figure 13;
Figure 15 shows a schematic plane view of the embodiment of figures 13 and 14 illustrating that light is substantially blocked from a direction perpendicular to the plane surface of the device;
Figure 16 shows a schematic perspective view of the embodiment of figures 13, 14 and 15 showing light transmission through the baffle at an angle relative to the surface of the baffle different from 90 degrees;
Figure 17 shows the light transmission and blockage principle of the eleventh embodiment; and
Figure 18 shows the application of the eleventh embodiment of figures 13 through 17 to block direct sunlight for instance through a window, but letting a certain amount of light from a portion of the sky above the sun pass through the device.

### DETAILED DESCRIPTION OFTHE INVENTION

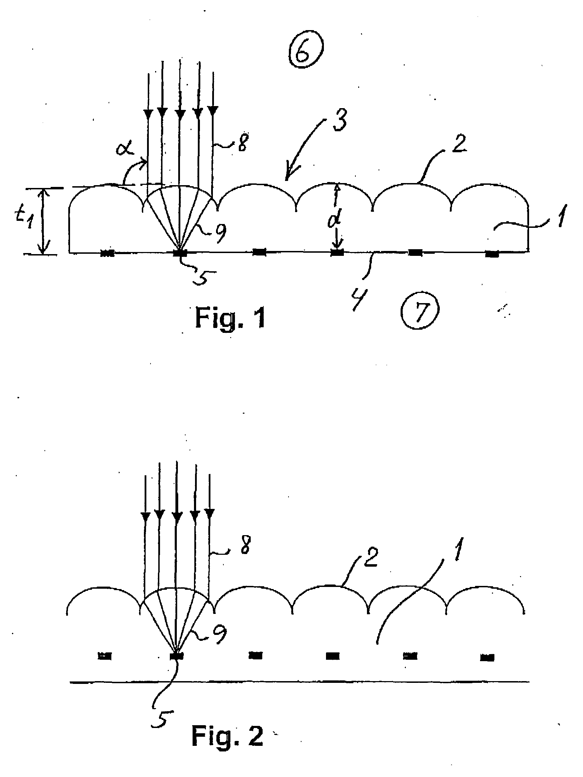

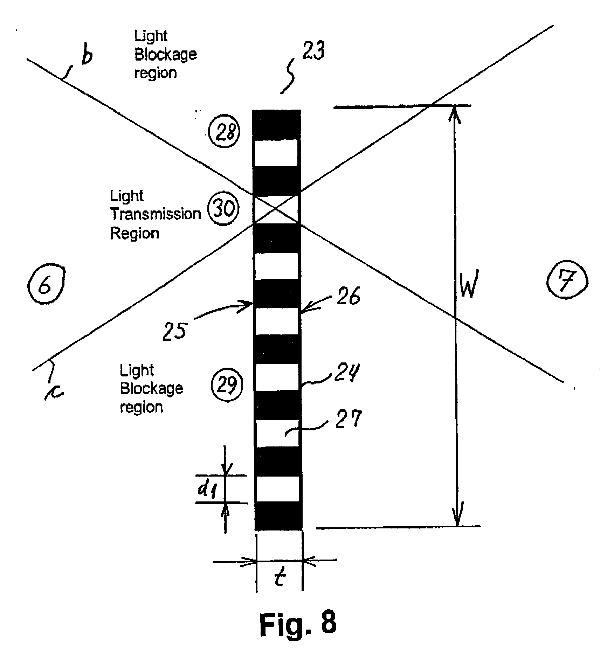

With reference to figures 1 through 7 there will be given a detailed description of embodiments of the device according to the present invention belonging to a first category of devices, in the following referred to as "LENTICULAR LENS EMBODIMENTS". After the description of this fist category of embodiments of the device according to the invention there will in connection with figures 8 through 18 follow a detailed description of a second class of embodiments of the device according to the present invention, this class of embodiments being referred to as "LIGHT PASSAGES EMBODIMENTS" in the following.

### LENTICULAR LENS EMBODIMENTS

With reference to figure 1 there is shown a first embodiment of a device according to the invention comprising a baffle 1 made of a suitable light- transparent material and provided with lens-shaped portions 2 extending longitudinally (e.g. perpendicularly to the plane of the paper) along an outer (front) surface 3 of the baffle 1 and light blockage members or ribbons 5 extending longitudinally along the opposite (rear) surface 4 of the baffle 1. The lens-shaped portions 2 are dimensioned, shaped and oriented in such a manner relative to the front and/or rear surface (3,4) that substantially parallel rays 8 of light from a light source in said light source region 6 directed towards said front surface 3 with a given angle of incidence α relative to the front surface 3 will converge 9 on a light blockage member 5 provided at a given distance (d) from said front surface 3, whereby transmission of light through said baffle 1 is substantially blocked, when the light source transmits light towards the front surface 3 of the baffle 1 from at least one given direction relative to the front surface 3 of the baffle 1. The baffle according to this class of embodiments of the present invention is made of a transparent material such as a suitable plastics material, Plexiglas etc.

Specifically the first embodiment of the device according to the invention comprises a square or rectangular substantially planar baffle 1 of a light transparent material with a front and a rear surface 3, 4, where the front surface 3 is provided with a pattern of lens-shaped members 2, the surface of which members 2 is formed as a portion of the circumferential surface of a cylinder (although other cross sectional shapes with similar light focusing properties could also be employed), where each cylinder extends in one direction of the baffle 1, thereby forming lens members that concentrate (as indicated by reference numeral 9) the parallel light rays 8 from the sun on the light blockage members 5 provided at a distance d behind the front surface 3. These light blockage members 5 are according to this embodiment of the invention preferably formed by elongated ribbons extending in parallel with the longitudinal axis of the cylindrical lens members.

The light blockage members or ribbons 5 may be reflective at least on a surface hereof facing the front surface 3 of the baffle 1. In this case light energy reaching the surface of the light blockage regions or ribbons 5 will to a large extend be reflected back towards the source region 6 preventing heating of the light blockage regions or ribbons 5. The light blockage regions or ribbons 5 may however alternatively by made light absorbing, whereby light energy reaching the light blockage regions or ribbons 5 will be converted to thermal energy, that can either be used for heating the reception region 7 or that can be converted to electrical energy by suitable means in thermal communication with the light blockage regions or ribbons 5. In the latter case the electrical energy can be used for various purposes, for instance for driving/controlling the device according to the invention or systems of such devices, as will be described in more detail below. A combination of reflective and absorptive light blockage members or ribbons may furthermore be applied.

In the embodiment shown in figure 1 the light blockage members or ribbons 5 are provided on or adjacent the rear surface 4 of the baffle 1. It is however also possible to provide these members or ribbons 5 within the body of the baffle itself, as for instance shown in figure 2, which shows a second embodiment of the invention corresponding the first embodiment except for the longitudinally extending light blockage members 5 being embedded in the material of the baffle 1.

The device according to the invention may be implemented as a sandwich structure or laminated glass structure, where the light blockage members are provided in a binder layer within the structure on one side of which is provided a front layer comprising the lens shaped portions and on the other side provided with a rear layer of a transparent or semi-transparent material, which rear layer if desired may function as a diffuser for light transmitted through the front and light blockage member layers. Various plastics materials (for instance pultruded glassfiber reinforced polyester) may be used in the device according to the invention as well as glass.

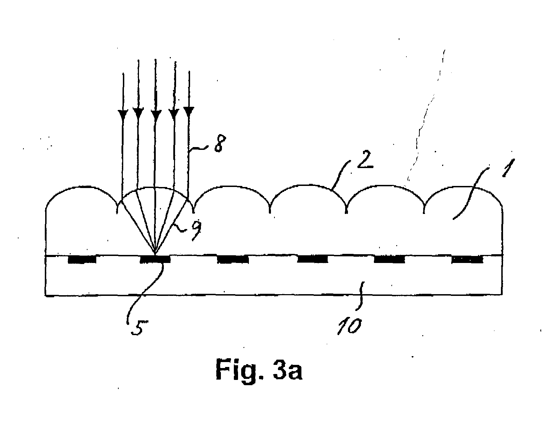

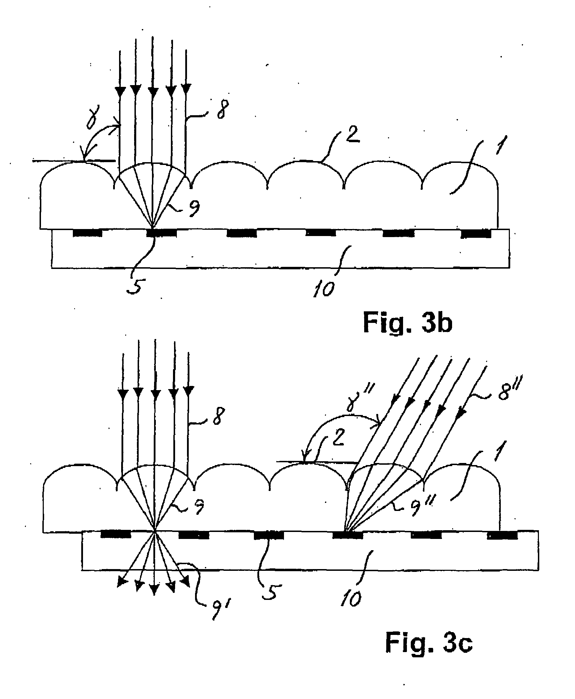

Referring to figure 3a, 3b and 3c there is shown a third embodiment of a device according to the invention, where the light blockage members or ribbons 5 are provided on a second baffle 10 that can be displaced relative to a first baffle 1 comprising the lens-shaped portions 2. The displacement of the second baffle 10 relative to the first baffle 1 has the dual effect that light transmission through the device (the two baffles 1 and 10) can be turned on an off and that the angle of incidence γ of direct light where the passage of light rays 8" through the device will be blocked can be varied . This is illustrated in figure 3b and 3c, where the second baffle 10 has been displaced relative to the first baffle 1. Completely unobstructed light transmission is obtained with the displacement of the second baffle 10 relative to the first baffle 1 as shown in figure 3c, where the converging light rays 9 for light incidence γ = 90 degrees after passage through the focal region of the lens-structure diverges into the reception region 7 as indicated by reference numerals 9'. Light rays 8" with an angle of incidence γ" are however prevented from penetrating through the device.

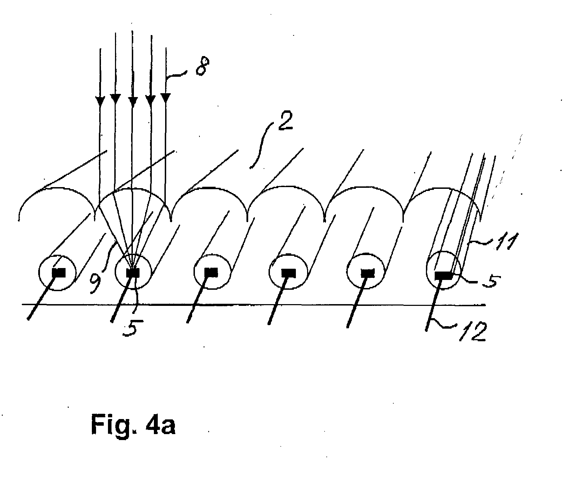

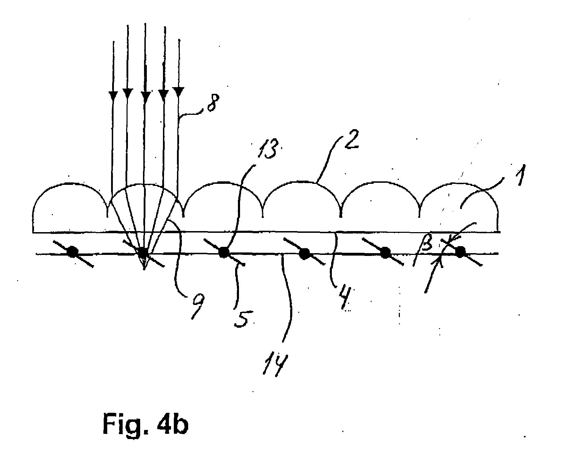

Referring to figure 4a and 4b there is shown a fourth and fifth embodiment of the device according to the invention where the surface of the light blocking members or ribbons 5 can be tilted relative to the direction of the incident light rays. Thus figure 4a shows a schematic perspective representation of an embodiment of the invention comprising light blockage members or ribbons 5 within the baffle 1, where the light blockage members or ribbons 5 are provided in channels 11 in the interior of the baffle 1 and where the light blockage members or ribbons 5 are mounted for rotation about a longitudinal axis 12 through the members 5.

Figure 4b shows a plane cross sectional representation of a fifth embodiment of the device according to the invention comprising light blockage members or ribbons 5 provided outside the baffle 1 and extending substantially in parallel with the rear surface 4 of the baffle 1, where the light blockage members or ribbons 5 are provided on a suitable support structure 14 and mounted for rotation about a longitudinal axis 13 through the members 5. The members 5 are shown tilted an angle β relative to the support structure 14 or the plane of the rear surface 4 of the baffle 1.

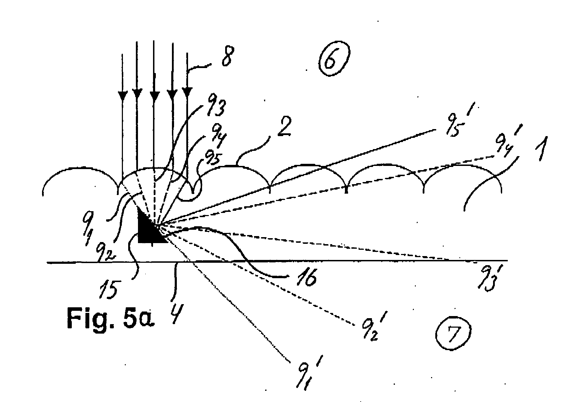

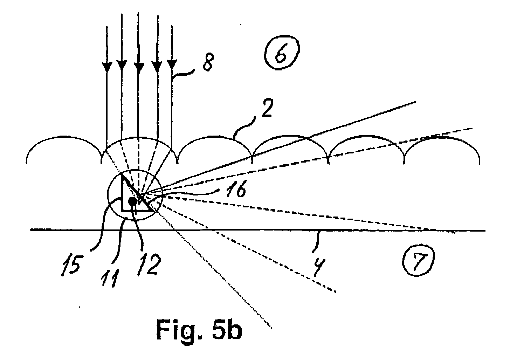

Figure 5a shows a schematic cross sectional view of a sixth embodiment of a device according to the invention, where light blockage members 15 (only one of these is shown in the figure for clarity) are provided with a surface portion 16 that is inclined relative to the front 3 and/or rear surface 4 of the baffle 1, whereby a portion of the light rays impinging on the light blockage members can be re-directed to other regions around the baffle, provided the inclined surface portion 16 is totally or partially reflective. The spread of light from this structure is illustrated in figure 5 by the light rays 9₁', 9₂', 9₃', 9₄' and 9₅'.

Figure 5b shows a schematic cross sectional view of a seventh embodiment of a device according to the invention, where the light blockage members 15, having an inclined surface 16 as in figure 5a are mounted for rotation 12 in channels 11 within the interior of the baffle. Only one of these light blockage members 15 and a corresponding channel 11 is shown in the figure for clarity.

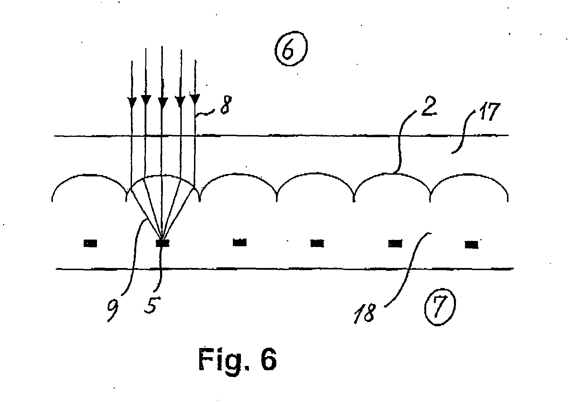

Figure 6 shows an eight embodiment of a device according to the invention, where the lens shaped portions are covered by an outer, front layer 17 of a transparent material, the device thus forming a sandwich structure comprising the frontal covering layer 17 on top of the baffle layer 18, which in the shown embodiment corresponds to the embodiment shown in figure 2, with embedded light blockage members or ribbons 5. It is however noted that any of the embodiments shown and described in this specification could be provided with a cover layer as exemplified with layer 17 in figure 6.

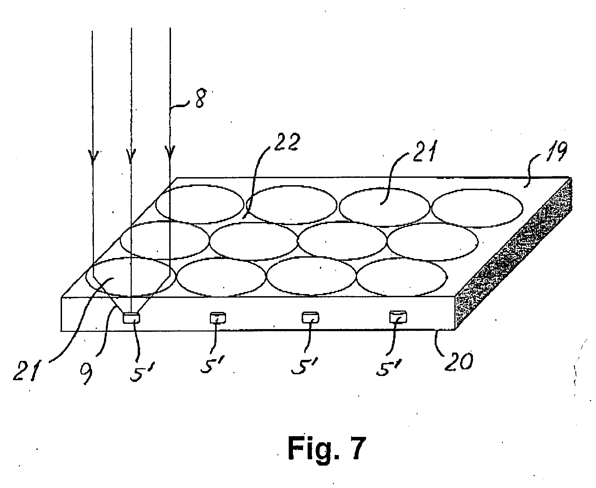

Figure 7 show a ninth embodiment of a device according to the invention, where the part-cylindrical lens portions 2 of the preceding embodiments are replaced by circular lens portions 21 and where the longitudinally extending light blockage members or regions 5 of the preceding embodiments are replaced by individual bight blockage members 5' in the focal points of each of the individual lens portions. These members 5' may also be provided with inclined surface portions and/or mounted in channels or compartments within the body of the device in such a manner that their orientation relative to the surfaces of the device, and hence to the incident light rays, may be varied. Furthermore, although the lens shaped portions 21 are shown as separate entities in figure 7 they could also overlap adjacent lens shaped portions in order to form a smooth transition from one lens shaped portion to adjacent lens shaped portions without the intermediate portions 22 shown in figure 7.

Any of the embodiments shown and described in figure 1 through 7 (as well as the embodiments to be described in connection with figures 8 through 18) could either be used alone or in combination with other devices to form a system of devices for blockage of light transmission from a spatially confined light source to a receptor region and/or for control of such light transmission. The combination of devices according to the invention to form a system will be reverted to in the following. Specifically, although not exclusively, the devices according to the invention may be used in Venetian blinds (as the slats of the Venetian blind) or in window shutters, but other applications would also fall within the scope of the present invention.

### LIGHT PASSAGES EMBODIMENTS

Referring to figure 8 there is shown a schematic view off a tenth embodiment of a device according to the invention The device generally designated by reference numeral 23 comprises a baffle 24 that could for instance be used as a single slat in a Venetian blind, but it could also be used either in combination with other devices according to the invention, in combination with devices that do not form part of the present invention or even as a single device by proper adaptation to for instance a window opening in a façade of a building. The devices according to the invention could also form part of a shutter. The device according to the shown tenth embodiment of the invention comprises a substantially planar, rectangular baffle 24, shown in schematic, cross sectional view in figure 8, of a width W, a length L (perpendicular to the plane of view in figure 8) and a thickness t. Extending through the baffle, from a first surface 25 to a second surface 26 is provided a pattern of through openings forming channels 27 through which light can pass from the outside region (source region) 6 to the inside region (reception region) 7. As shown in figure 8, the passage of light through the channels 27 of the baffle will be blocked for a light source located in first regions 28 and 29 ("light blockage region" in figure 8), whereas light can pass through the channels 27 from light sources (or a diffuse light) located in a second region 30 ("light transmission region" in figure 6). It has been found that a major amount of the light intensity received from the sky comes from directions relatively close to zenith and the shown embodiments of the device according to the invention can effectively block an annoying direct light source (for instance the sun) and still maintain a relatively large overall light intensity in the receptor region 7, for instance a room behind the device, originating from the light transmission region 30.

It is noted that the extent of the blockage region (lines b and c in figure 8) and hence the extent of the transmission region 30 will be determined by the width d1 of the openings and the thickness t of the baffle. In a practical application these parameters (among others) may be optimised according to the specific application.

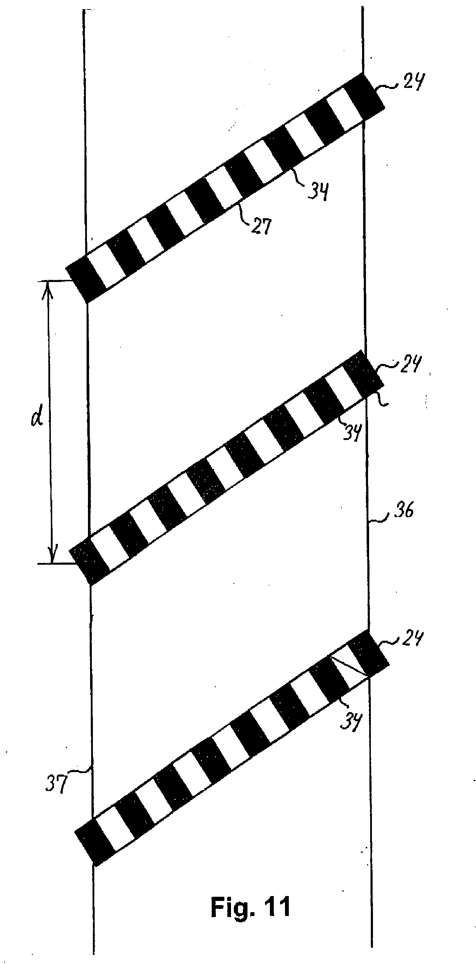

Specifically the tenth embodiment of the device according to the invention shown in figure 8 will have the thickness t of the baffle is approximately 3 mm, a width d1 of the open channels through the baffle of approximately 3 mm and a width d2 of the closed portions of the baffle of approximately 1 mm, but other dimensions and combinations hereof can also be chosen. An example of the application of such devices to form a specific system according to the invention is shown in figure 11.

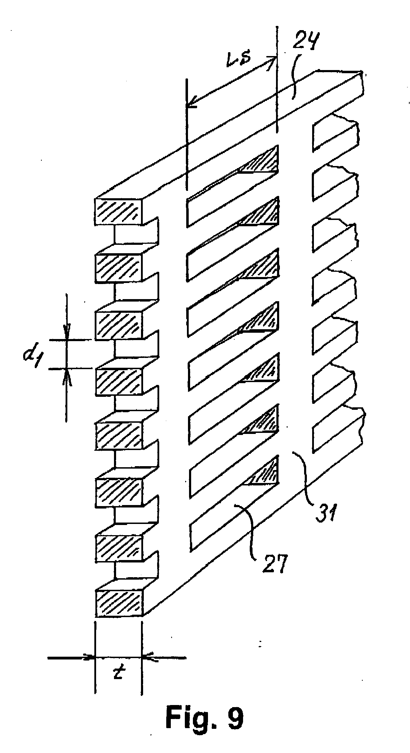

With reference to figure 9 there is shown a schematic perspective view of a portion of the tenth embodiment shown in figure 8. The individual openings (channels) 27 are formed as elongated slits of length Ls, width d1 and thickness t, extending longitudinally along the length of the baffle 24. The individual slits can be arranged in many different patterns that all fall within the scope of the present invention. Also it is possible to provide the slits in only some chosen regions of the baffle, if desired, and the openings (channels) may also be of other shapes than the elongated slits shown in figure 9. The length Ls of the slits can be chosen up to a certain maximum length ultimately determined by the required rigidity of the baffle. In the embodiment shown in figure, the individual columns of slits are divided by regions 31 extending across the baffle between adjacent columns of slits.

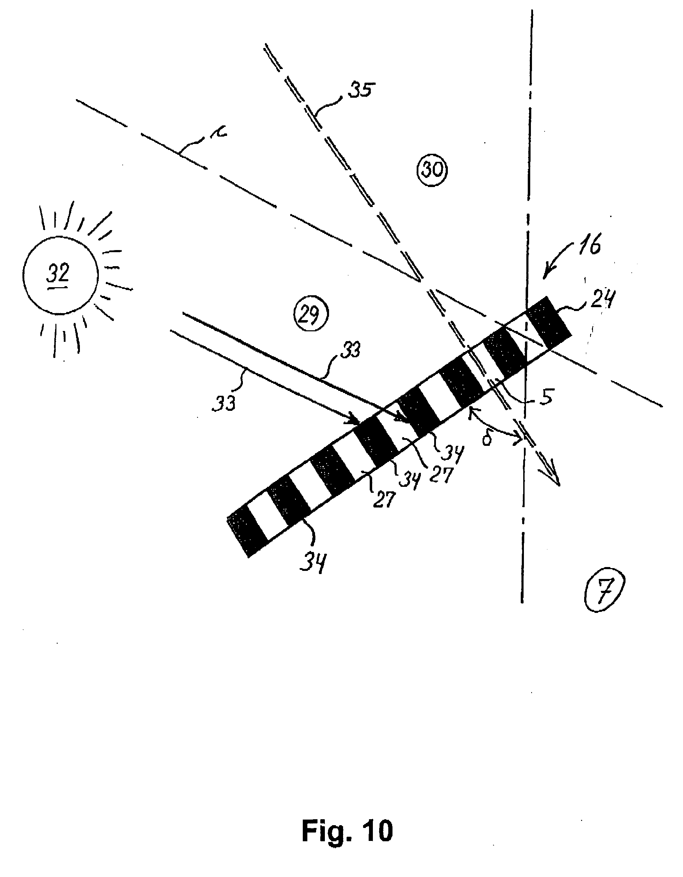

Referring to figure 10 there is shown the use of the embodiment of a device according to the invention shown in figures 8 and 9 for blockage of direct sunlight. The sun 32 emits direct sunrays 33 impinging on the device 24, which is for instance placed in a window opening, behind which a room 7 is located. By tilting the device 24 an angle δ relative to the vertical, the light source (the sun 32) is brought into the light blockage region 29, which is upwardly bounded by line c in figure 10. The direct sunrays 33 are thus prevented from penetrating through the baffle 24 by impinging on the structures 34 between the channels 27. Dependent on the material, surface characteristics, etc. of the structures 34, the direct sunrays 33 can be substantially absorbed by these structures, reflected from these structures or a combination hereof. Above the light blockage region 29, the light transmission region 30 is located, and light rays, as for instance illustrated at 35, can penetrate through the channels 27 in the device 24 and reach the reception region 7 behind the device.

Referring to figure 11 there is shown an embodiment of a system according to the invention comprising several devices 24 according to the tenth embodiment of the invention shown in figures 8, 9 and 10. The plurality of devices 24 are in this embodiment of a system according to the invention mounted on a support structure, such as wires or cords or rigid frame members 36, 37 with a distance d between adjacent devices. Tilting of the devices in order to obtain maximal blockade of an annoying sound source, such as direct sunlight, may be accomplished by a relative displacement of the two cords or members 36, 37, for instance in a manner resembling that of tilting the slats of a Venetian blind. It is, however, understood that the embodiment shown and described in connection with figure 11 could also have been used to form a system of the kind shown and described in the following in connection with figures 10 through 16 and that indeed any of the devices according to the invention, specifically also those described in connection with figures 1 through 7 (the lenticular lens embodiments) could be used to form such a system. Furthermore, as mentioned above, a system according to the invention may even comprise a number of devices according to the present invention and a number of devices not falling within the scope of the present invention, such as traditional slats of a Venetian blind, through which light transmission is not possible, as well as combinations of the different embodiments of devices according to the present invention.

The system according to the invention may also comprise tilt and control mechanisms for providing proper orientation of the devices relative to an annoying sound source. These mechanisms can be manually controlled, for instance by traditional tilt cords of a Venetian blind or automatically controlled by the provision of one or more light sensitive sensors on one or more of the devices.

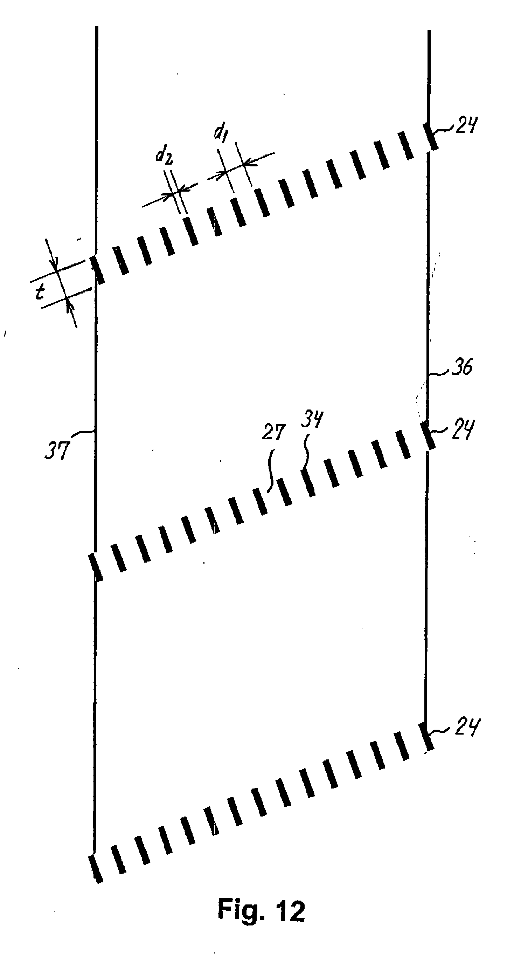

Referring to figure 12 there is shown a system according to the invention comprising devices in principle corresponding to the embodiment shown in figure 8, but with other relative dimensions of the open and closed portions of the baffle. According to a preferred embodiment of the device according to the invention, the thickness t of the baffle is approximately 3 mm, the width d1 of the open channels through the baffle is approximately 3 mm and the width d2 of the closed portions of the baffle is approximately 1 mm. This embodiment of the device is incorporated in the system shown in figure 9.

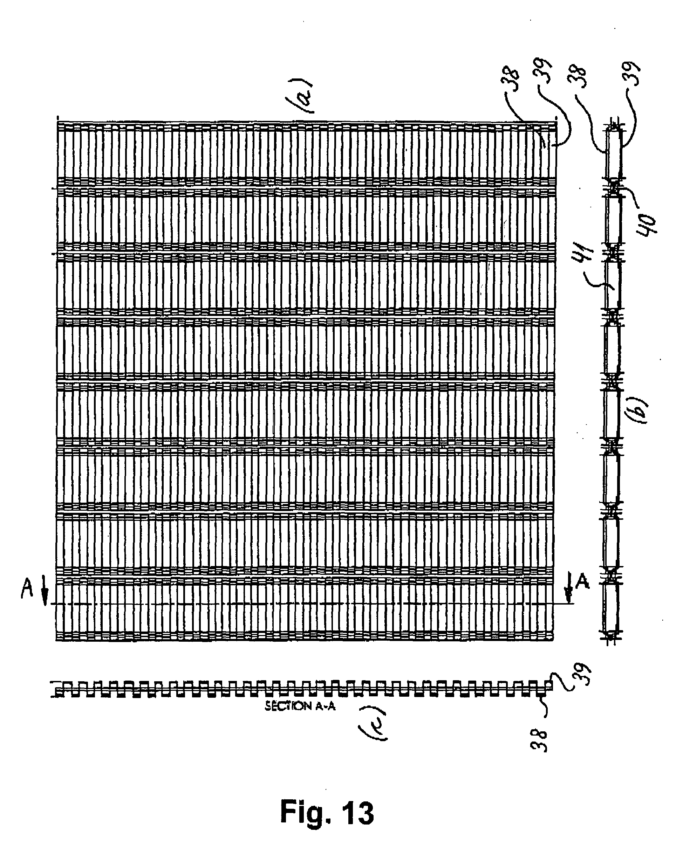

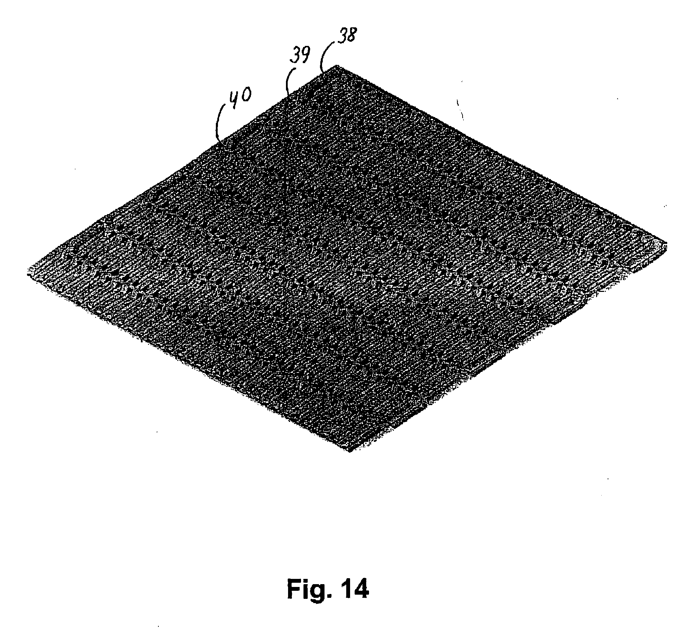

Referring to figure 13 there is shown a schematic view of an eleventh embodiment of the device according to the invention seen from above (figure 13a), from the front (figure 13b) and from the side (figure 13c), respectively. According to this embodiment a baffle is formed by narrow, elongated (ribbon-formed) members alternatively winding behind an upper level at reference numeral 38 and a lower level, at reference numeral 39, where adjacent elongated members cross at crossings 40. Save in the vicinity of the crossings 40, the interior region 41 of the baffle is hollow, whereby channels are formed through the baffle and thus allowing light to pass the baffle for certain degrees of incidence of the light rays relative to the baffle, which will become more readily apparent from the following figures 14, 15 and 16. When light rays impinge perpendicularly on the plane of the baffle, the light rays will be effectively blocked except possibly in the vicinity of the crossings 40. The elongated members can be made of a suitable metal, such as aluminium, but other materials, for instance plastics materials may also be used.

Referring to figure 14 there is shown a schematic perspective view of the eleventh embodiment of figure 13 with the elongated members and crossings designated by the same reference numerals as in figure 13.

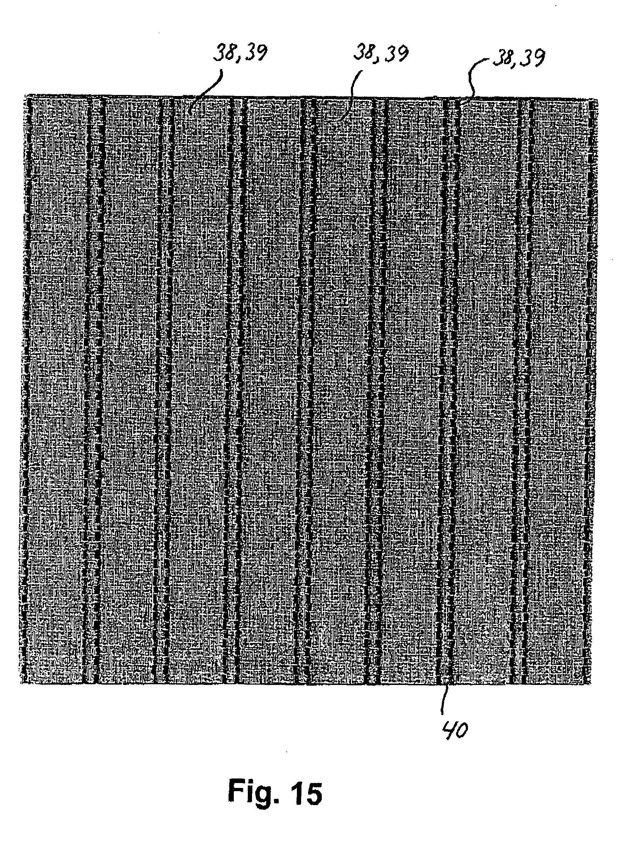

Referring to figure 15 there is shown a schematic plane view of the eleventh embodiment of figures 13 and 14 illustrating that light is substantially blocked from a direction perpendicular to the plane surface of the device. Thus, the elongated members 38 and 39 form a virtually unbroken surface when seen from a direction substantially perpendicular to the plane of the baffle. At the crossing 40, smaller regions through which light may pass may be present as indicated by reference numeral 41 in figure 15.

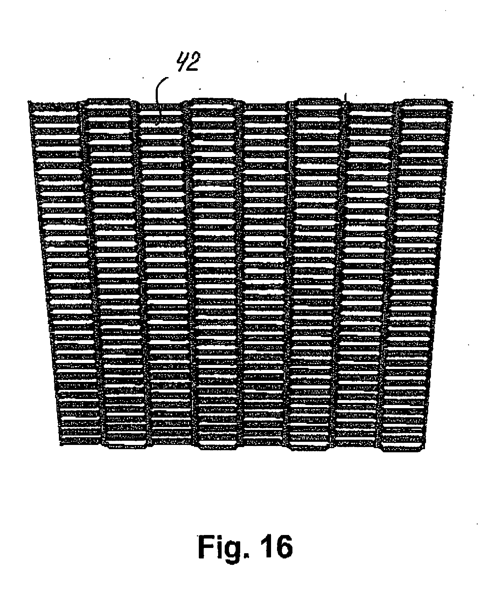

Referring to figure 16 there is shown a schematic perspective view of the eleventh embodiment of figures 13, 14 and 15 showing light transmission through the baffle at an angle relative to the surface of the baffle different from 90 degrees. Thus, in the representation in figure 16 the plane of the baffle is inclined relative to the plane of the drawing, whereby - seen from this direction - channels 42 are formed through the substantially hollow baffle, through which channels 42 light can pass through the baffle.

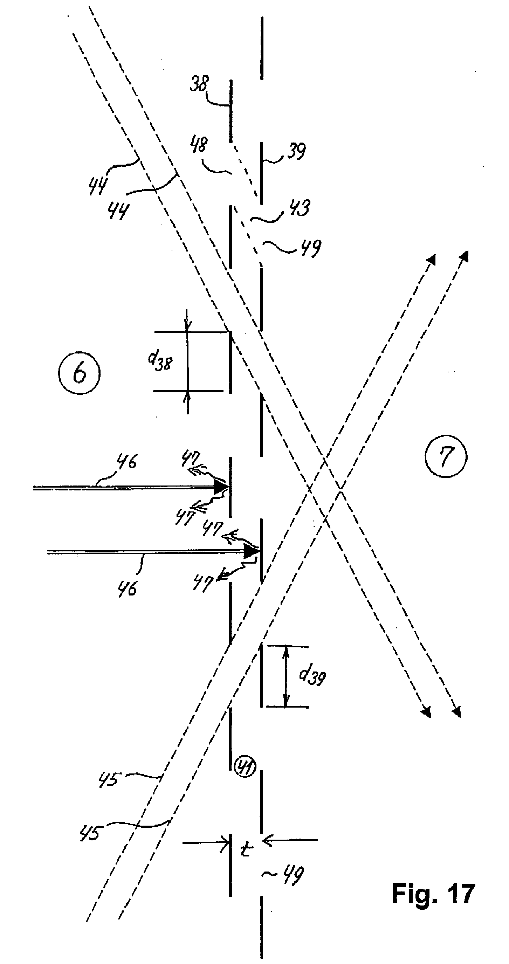

Referring to figure 17 the light transmission and blockage principle of the eleventh embodiment of a device according to the invention is explained in more detail. The elongated members 38 and 39 together with the hollow interior 41 of the baffle form channels 43 for light propagation within certain directions relative to the baffle. Such light propagation through the channels 43 of the baffle is exemplified by the rays 44 and 45 in figure 17. Light rays 46 impinging substantially perpendicularly on the baffle, however, hit the elongated members 38 and 39 without being able to pass through channels formed through the baffle and are either reflected from the elongated members 38 and 39, as indicated schematically by reference numeral 47, or absorbed as thermal energy in the elongated members of a combination of these mechanisms. Thus, light rays 44 and 45 reach the receiving region 7 behind the baffle, whereas light rays 46 are substantially prevented from reaching this region. The characteristics of the baffle are determined by a number of parameters, such as the choice of material (for instance with respect to its ability to reflect or absorb light energy) and the geometrical parameters such as the thickness t of the baffle (or alternatively the thickness of the elongated members 38 and 39 and of the hollow interior region 41 of the baffle) and the widths d₃₈ and d₃₉, respectively, of the elongated members 38 and 39. The front surface of the baffle, i.e. the surface facing the light source, thus comprises a pattern of openings 48 and the opposite rear surface of the baffle, i.e. the surface facing the reception region 7, also comprises a pattern of openings 49 that - together with the hollow interior 41 of the baffle - defines light transmission passages or channels 43 through the baffle.

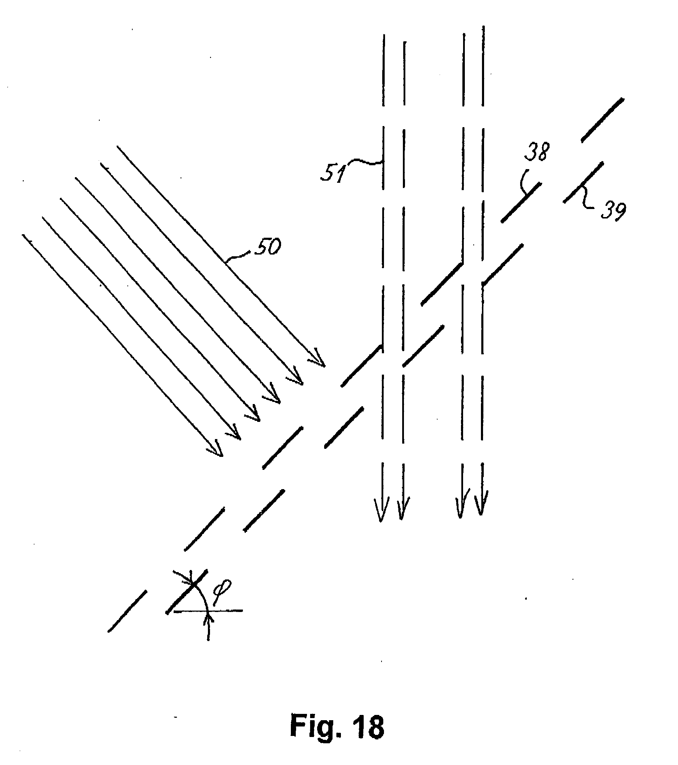

Referring to figure 18 there is shown the application of the embodiment of figures 13 through 17 to block direct sunlight 50 for instance through a window, but letting a certain amount of light 51 from a portion of the sky above the sun pass through the device. In order to block the passage of direct sunlight through the baffle, the baffle is inclined an angle φ relative to horizontal, thus making the direct sun rays 50 impinge at an angle of substantially 90 degrees on the plane of the baffle as shown in figure 18.

Any of the systems and devices according to the invention could be provided with means for automatically controlling the orientation of the various devices according to the invention relative to a direct light source and/or for rotating light blockage members or ribbons within the lenticular lens embodiments of these devices. The energy supply for controlling the devises or system of devices can according to the invention in certain embodiments hereof be derived from absorbed light energy, which energy is converted to electrical energy my suitable means in thermal communication with those members of the devices that absorb light energy. The devices and system of devices can furthermore according to the invention comprise sensor means for automatically following the movement of a direct light source, such as the sun, and hence determining the direction relative to the device/system from which light transmission through the device/system should be blocked.

## Claims

1. A device for blockage of light transmission from a spatially confined light source, such as the sun, to a receptor region (7) in space, where said light source is located in a source region (6) on one side of the device and said receptor region (7) is located in the other side of the device, where the device comprises at least one three-dimensional body, such as a baffle or panel (1) and where the device is provided with a front surface (3) and a rear surface (4), the three-dimensional body (1) being of a predetermined thickness (t, t1) and where the three-dimensional body (1) is provided with a plurality of light directing means defining light transmission paths or channels from said front surface (3) to said rear surface (4) of the device, such that light transmission from said source region (6) to said receptor region (7) is substantially blocked when said light source transmits light towards the front surface (3) of the device from at least one given direction relative to the front surface (3) of the device.

2. A device according to claim 1, where said three-dimensional body is substantially planar.

3. A device according to claim 1, where said three-dimensional body is curved.

4. A device according to claim 1, 2 or 3, where said three-dimensional body has a length, width and thickness, where the thickness is substantially less than the length and/width.

5. A device according to claim 1, 2, 3 or 4, where said light directing means comprises lens shaped portions (2, 21) dimensioned and oriented in such a manner relative to said front and/or rear surface (3, 4) that substantially parallel rays (8, 8") of light from a light source in said light source region (6) directed towards said front surface (3) with a given angle of incidence (α) relative to the front surface (3) will converge (9, 9") on light blockage regions or members (5, 15) provided at a given distance (d) from said front surface (3), whereby transmission of light through said device is substantially blocked, when said light source transmits light towards the front surface (3) of the baffle (1) from at least one given direction relative to the front surface (3) of the baffle (1).

6. A device according to claim 5, where said light blockage regions or members (5, 15) are provided on or adjacent said rear surface (4) of the baffle (1).

7. A device according to claim 5, where said light blockage regions or members (5) are embedded in the baffle (1).

8. A device according to claim 5, where said device comprises two baffles (1, 10) mounted for displacement relative to each other, where the first baffle (1) is provided with said lens shaped portions (2) and the second baffle is provided with said light blockage regions or members (5, 15), such that the light blockage regions or members (5, 15) can be displaced relative to the lens shaped portions (2).

9. A device according to claim 5, where said light blockage regions or members (5, 15) are mounted for rotation (12) in channels (11) within the baffle (1).

10. A device according to claim 5, where said light blockage regions or members (5, 15) are mounted for rotation (13) on a support structure (14) adjacent the rear surface (4) of the baffle (1).

11. A device according to any of the preceding claims 5 to 10, where the light blockage regions or members (5, 15) are formed by members (15) having at least one surface (16) that is inclined an angle relative to the direction front surface (3) or rear surface (4) of the baffle (1).

12. A device according to any of the preceding claims 5 to 10, where at least some of said light blockage regions or members (5, 15) are reflective at least on a surface hereof facing said front surface (3) of the baffle (1).

13. A device according to any of the preceding claims 5 to 12, where said light blockage regions or members (5, 15) are light absorbing.

14. A device according to claim 13, where at least some of said light absorbing light blockage regions or members (5, 15) are in thermal communication with means for converting thermal energy created by light absorption in said light absorbing light blockage regions or members (5, 15) to electrical energy.

15. A device according to any of the preceding claims, where said lens shaped portions are portions of a sphere (21) provided in a surface (19) of said device.

16. A device according to claim 15, where there to at least some of said lens shaped portions (21) are associated light blockage members (5') provided at a given distance from the surface of the lens shaped portions (21), such that light rays (8) impinging on the surface of said lens shaped portions (21) at a given angle relative to the surface will converge towards the region in the device, where said light blockage members (5') are provided.

17. A device according to claim 1, 2, 3 or 4, where said light directing means are formed by a plurality of through passages (27, 43) defining transmission paths or channels for light through the baffle, where the dimensions or orientation of said passages are chosen such that light transmission from said source region (6) to said receptor region (7) is substantially blocked when said light source transmits light towards the front surface (25) of the baffle from at least one given direction relative to the front surface of the baffle.

18. A device according to claim 17, where said baffle is a rectangular baffle and where said through passages (27) are substantially rectangular slits of length Ls and width d1 through the thickness (t) of the baffle, the longitudinal axis of the slits being oriented substantially similar to the longitudinal axis of the rectangular baffle.

19. A device according to claim 18, where the front surface of the baffle comprises a first pattern of openings (48) for the passage of light and the rear surface of the baffle comprises a corresponding second pattern of openings (49) for the passage of light, where said first and second patterns of openings (48, 49) are displaced relative to each other along the front and rear surfaces of the baffle, respectively, such that light transmission paths or passages (43) are formed through the baffle between said first and second pattern of openings (48, 49).

20. A device according to claim 19, where the inner region (41) of the baffle between said front and rear surfaces is substantially hollow, whereby light transmission paths (43) are created between a given first opening (48) in the front surface and at least one second opening (49) in the rear surface of the baffle.

21. A system for blockage of light transmission from a spatially confined light source, such as the sun, to a receptor region (7) in space, where said light source is located on one side (6) of the system and said receptor region (7) is located in the other side of the system, the system comprising at least one of the devices according to any of the preceding claims 1 to 20, where the devices are pivotally mounted with pivot axes extending substantially parallel to each other, with a given, predetermined distance d between adjacent pivot axes, such that the devices of the system can be pivoted at an angle, whereby light transmission through the devices from a spatially confined light source, such as the sun, to a reception region (7) is substantially blocked.

22. A system for blockage of light transmission from a spatially confined light source, such as the sun, to a receptor region (7) in space, where said light source is located on one side (6) of the system and said receptor region (7) is located in the other side of the system, the system comprising at least one of the devices according to any of the preceding claims 1 to 16, where said system comprises means for rotating/pivoting said light blockage regions or members (5, 15) in order to obtain a desired orientation of a surface portion of these regions or members relative to the direction of incidence of said direct light rays (8).

23. A system according to claim 21 or 22, where the system comprises means for automatically rotating/pivoting said devices (1) or light blockage regions or members (5, 15) in order to attain a given orientation of said devices (1) or light blockage regions or members (5, 15) relative to the direction of incidence of said direct light rays (8).

24. A system according to claim 21, 22 or 23, where the system is a Venetian blind, the devices according to any of the preceding claims 1 to 20 constituting the individual slats of the Venetian blind.

25. A system according to claim 21, 22 or 23, where the system is a shutter provided with a plurality of devices according to any of the preceding claims 1 to 20.

26. A method for blockage of light transmission from a spatially confined light source, such as the sun, to a receptor region (7) in space, where said light source is located on one side (6) of a device according to any of the preceding claims 1 to 20 or a system according to claim 21 or 25 and where said receptor region (7) is located on the other side of said device or system; where the method also comprises the step of orienting the first surface of the device in a direction that will substantially block the transmission of light from said light source to said reception region (7).

27. A method for blockage of light transmission from a spatially confined light source, such as the sun, to a receptor region (7) in space, where said light source is located on one side (6) of a device according to any of the preceding claims 1 to 16 or a system according to claim 21 or 25 and where said receptor region (7) is located on the other side of said device or system; where the method also comprises the step of rotating or displacing said light blockage members or ribbons (5, 5', 15), whereby blockage of light from a given direction of incidence relative to the device can be attained.

28. A method according to claim 26 or 27, furthermore comprising the step of automatically orienting the device or rotating/displacing the light blockage members or ribbons (5, 5', 15) by the detection of light energy impinging on a given surface area of the first surface of the device and controlling the orientation of the device or rotating/displacing the light blockage members or ribbons (5, 5', 15) based on the detected energy.

29. A method according to any of the preceding claims 26, 27 and 28, comprising supplying the devices or system with energy derived from the light energy received by the light blockage members or ribbons (5, 5', 15).
